Europäisches Patentamt

European Patent Office

Office européen des brevets

(19)

(11) Veröffentlichungsnummer: **0 100 495**

**A1**

(12) **EUROPÄISCHE PATENTANMELDUNG**

(21) Anmeldenummer: **83107196.4**

(22) Anmeldetag: **22.07.83**

(51) Int. Cl.³: **A 22 C 13/02**

(30) Priorität: **31.07.82 DE 3228675**

(43) Veröffentlichungstag der Anmeldung:
**15.02.84 Patentblatt 84/7**

(84) Benannte Vertragsstaaten:
**AT BE CH DE FR GB IT LI LU NL SE**

(71) Anmelder: **HOECHST AKTIENGESELLSCHAFT**
**Postfach 80 03 20**
**D-6230 Frankfurt am Main 80(DE)**

(72) Erfinder: **Andrä, Klaus, Dr.**
**Konrad-Adenauer-Strasse 10**
**D-6501 Zornheim(DE)**

(72) Erfinder: **Hutschenreuter, Elfriede**
**Haardtstrasse 116**
**D-6208 Bad Schwalbach(DE)**

(54) **Geraffte Wursthülle und Verfahren zu ihrer Herstellung.**

(57) Bei der gerafften Wursthülle (1), bestehend aus einer schlauchförmigen Hülle mit einer längsaxial sich erstreckenden Verdickung (2), z.B. Klebenaht, ist diese Verdickung (2) spiralförmig angeordnet und erstreckt sich quer zu den die Außenseite der gerafften Wursthülle (1) bildenden spiralförmigen Windungen (24) der Hauptfalte. Zwischen zwei benachbarten Windungen (24) der Hauptfalte ist die Verdickung (2) um ihre Breite versetzt.

Fig. 1

EP 0 100 495 A1

HOECHST AKTIENGESELLSCHAFT
KALLE Niederlassung der Hoechst AG

82/K 040          - 1 -          WLJ-Dr.Gt-cc
                                  21. Juli 1983

Geraffte Wursthülle und Verfahren zu ihrer Herstellung.

Die Erfindung bezieht sich auf eine geraffte Wursthülle von der im Oberbegriff des Anspruchs 1 genannten Art und auf ein Verfahren zu ihrer Herstellung. Die geraffte Wursthülle wird auch als Raupe bezeichnet.

Eine geraffte Wursthülle dieser Art ist aus der EP-A-0 037 543 bekannt. Dort wird die Lehre gegeben, die aus der US-A-4,185,358 bekannte Vorrichtung zum Raffen von Wursthüllen, die eine Verdickung in Form einer Klebenaht aufweisen, in der Weise zu verwenden, daß sich die Hülle während des Raffens mit dieser speziellen Raffvorrichtung selbständig verdrehen kann. Das soll nach dieser Druckschrift beispielsweise dadurch geschehen, daß man einen Raffdorn einsetzt, der gegenüber dem üblichen verkleinert ist. Auf diese Weise soll bei einer Hülle mit einer Klebenaht die Nahtzone spiralig um die Längsachse der gerafften Schlauchhülle angeordnet werden. Die Anzahl der spiralförmigen Windungen der Nahtzone pro 10 m Hüllenlänge ist jedoch weit geringer als 10 und damit für ein hohes Raffverhältnis nicht befriedigend. Außerdem kann auf diese Weise keine reproduzierbare Steigung der gewendelten Nahtzone erreicht werden, zudem zeigt der Hohlkanal der Raupe keinen einwandfreien kreisförmigen Querschnitt, da die relativ dicke Nahtzone beim Raffen zumindest teilweise in den Hohlkanal hineinverlagert wird.

Es wurde ferner in der EP-A-0 054 162 beschrieben, eine Wursthülle mit einer Klebenaht während des Raffvorgangs spiralförmig zu verdrehen, indem man eine Raffvorrichtung entsprechend US-A-2,819,488, US-A-3,619,854, US-A-3,594,857 oder US-A-3,766,603 verwendet. Die Anzahl der Windungen pro 10 m Schlauchlänge soll dann zwischen 0,5 und 10 betragen. Eine höhere Anzahl von Windungen pro 10 m Schlauchlänge läßt sich durch eine spiralige Verdrehung des Schlauches während des Raffens nicht erzielen. Ferner ist der EP-A-0 054 162 kein Hinweis zu entnehmen, in welcher Weise die Windungen der Klebenaht über die Hauptfalten der Raupe verlaufen sollen. Eine Anregung, die Knickfestigkeit der gerafften Hülle durch eine spezielle Anordnung der Klebenaht zu erhöhen, kann diese Druckschrift nicht geben, insbesondere weil nach diesem Stand der Technik nur die Anzahl der Windungen der Klebenaht von Bedeutung sein soll.

Ausgehend von dem aus der EP-A-0 037 543 bekannten Stand der Technik besteht die Aufgabe der vorliegenden Erfindung darin, eine geraffte Wursthülle von der dort beschriebenen Art aufzuzeigen, die eine wesentlich höhere Knickfestigkeit und trotzdem einen gleichmäßigen, im Querschnitt kreisförmigen, geraden inneren Hohlraum mit relativ glatter Innenwandung aufweist, der ein problemloses Aufbringen der gerafften Wursthülle auf das Füllrohr einer Füllvorrichtung gestattet, und zwar auch bei Füllrohren mit relativ großem Durchmesser, welche ein schnelles und damit wirtschaftliches Abfüllen von Wurstmasse in die geraffte Wursthülle ermöglichen. Eine weitere Aufgabe der Erfindung besteht darin, Verfahren

HOECHST AKTIENGESELLSCHAFT
KALLE Niederlassung der Hoechst AG

- 3 -

zur Herstellung einer solchen gerafften Wursthülle anzugeben.

Diese Aufgabe wird gelöst mit der im Anspruch 1 genannten gerafften Wursthülle sowie durch Verfahren mit den in
Anspruch 9 und 16 beschriebenen Merkmalen. Die Unteransprüche geben weitere Ausführungsformen der Wursthülle
bzw. des Verfahrens an.

Diese geraffte Wursthülle zeigt den Vorteil, daß sie
trotz ihrer Verdickung, insbesondere in Form einer relativ dicken Klebenaht, eine wesentlich höhere Verdichtung
zeigt und gleichzeitig einen im wesentlichen gleichmäßigen äußeren Umfang sowie gleichmäßigen kreisförmigen
Innenumfang aufweist. Der Hohlkanal der Raupe ist geradlinig und zeigt eine im wesentlichen glatte Innenwand,
trotz der Verdickung der Hülle im Bereich der Klebenaht.
Die Verfahren sind besonders einfach durchzuführen, ohne
daß in der Raffvorrichtung irgendwelche apparative Veränderungen erforderlich sind. Überraschenderweise läßt
sich mit diesen Verfahren die relativ dickwandige Nahtzone, die aus mindestens zwei Materiallagen besteht,
derart in der Raupenwandung unterbringen, daß sowohl die
Raupenaußenfläche als auch ihre innere Oberfläche glatt
und gleichmäßig sind, so daß die geraffte Hülle problemlos auf Füllrohre mit relativ großem Durchmesser aufgeschoben werden kann und beim Füllvorgang gleichmäßig
unter Entraffen vom Füllrohr abläuft.

Schlauchhüllen mit einer Verdickung in Form einer Naht

HOECHST AKTIENGESELLSCHAFT
KALLE Niederlassung der Hoechst AG

- 4 -

oder mehreren längsaxial sich erstreckenden Nähten und ihre Herstellung durch Verklebung der Randbereiche der längsaxial sich erstreckenden Randzonen sind an sich bekannt, wozu beispielsweise auf die eingangs zitierte EP-A-0 037 543 und EP-A-0 054 162 verwiesen wird.

Die Klebenaht wird gebildet durch die Überlappung und Verklebung zweier längsaxial sich erstreckender Randzonen einer zu einem Schlauch gebogenen Folienbahn. Sie kann auch gebildet werden, indem man die längsaxialen Kanten einer Bahn bei der Schlauchformung aneinanderstoßen läßt, ohne daß sie sich gegenseitig überlappen, und beide Randzonen mit einem Folienstreifen miteinander verbindet. Unter Breite der Klebenaht ist nicht die Breite der Klebstoffschicht, sondern die Breite des Überlappungsbereichs der Randzonen miteinander bzw. mit dem Folienstreifen zu verstehen. Im Bereich der Klebenaht ist die Dicke des Schlauchs folglich mindestens doppelt so dick wie die Dicke des Hüllenmaterials bzw. setzt sich die Schlauchdicke zusammen aus Dicke des Hüllenmaterials und Dicke des Folienstreifens. Die Breite des Klebenaht beträgt gewöhnlich bis zu 10 % des Schlauchumfangs und sollte mindestens 1 mm betragen.

Geeignetes flexibles Basismaterial für die Schlauchhülle ist vorzugsweise Cellulose, d.h. Zellglas, regenerierte Cellulose oder Cellulosehydrat, die gegebenenfalls mit einer Fasereinlage verstärkt ist, wie sie zur Verpackung von Lebensmitteln, insbesondere als Wursthüllenmaterial, üblich ist.

Zusätzlich kann die geraffte Schlauchhülle auf ihrer inneren und/oder äußeren Oberfläche übliche Überzüge, z.B. auf der Innenseite ein Mittel zur Verbesserung der Schälbarkeit der Schlauchhülle vom Füllgut aufweisen.

Die geraffte Wursthülle zeigt die aus der US-A-3,907,003 bekannte Faltenstruktur in Form einer nach außen weisenden schraubenlinienförmigen Hauptfalte oder primären Faltung und zwischen den Windungen dieser Hauptfalte und dem Innenraum der gerafften Wursthülle angeordneten Sekundärfalten. Die spiralförmige primäre Faltung liegt am Außenumfang und bildet diesen selbst.

Wird die geraffte Wursthülle entrafft, flachgelegt, der erhaltene Flachschlauch in Längsrichtung aufgeschnitten und aufgefaltet, so erscheint die spiralförmige primäre Faltung in entfaltetem Zustand in parallelen geradlinigen Faltlinien, die zur Längsachse des erhaltenen Folienstreifens einen Winkel von kleiner als 90° und größer als 60° bilden. Die sekundäre Faltenstruktur befindet sich zwischen dem Innen- und Außendurchmesser der Raupe.

Im zusammengefalteten Zustand hingegen befindet sich die schraubenlinienförmige Hauptfalte auf der Außenseite der Raupe und die Sekundärfalten in der Doppellage aus Hüllenmaterial. Eine Doppellage des Hüllenmaterials befindet sich somit jeweils zwischen zwei aufeinanderliegenden Windungsabschnitten der schraubenlinienförmigen Hauptfalte.

HOECHST AKTIENGESELLSCHAFT
KALLE Niederlassung der Hoechst AG

- 6 -

Die Sekundärfalten sind besonders regelmäßig ausgebildet.
Wird die geraffte Wursthülle auseinandergezogen, so
zeigen die leicht erkennbaren Sekundärfaltenlinien die
Gestalt einer vollständig durchgehenden, gleichmäßigen
Zickzacklinie, wobei die Spitzen der Zickzacklinie von
der schraubenförmigen Linie der Hauptfalte im wesentlichen konstanten Abstand haben. Die einzelnen Abschnitte
dieser Zickzacklinie bilden Schraubenlinienabschnitte mit
zur Hauptfalte entgegengesetzten Windungssinn. Außer der
zickzackförmigen Sekundärfalte weist die geraffte Wursthülle praktisch keine weiteren Sekundärfalten auf.

Die streifenförmige Klebenaht erstreckt sich spiralförmig
um die Längsachse der gerafften Wursthülle. Wird die geraffte Wursthülle auseinandergezogen, so zeigt sich, daß
sich die Klebenaht in Form eines Streifens spiralförmig
um die Schlauchhülle erstreckt, wobei die Zahl der Windungen pro Längeneinheit der entrafften Schlauchhülle
wesentlich geringer ist als die Anzahl der Windungen der
Hauptfalte. Die Klebenaht erstreckt sich quer über die
Windungen der Hauptfalte und ist zwischen zwei benachbarten Windungen gerade um den Betrag der Breite der Klebenaht mit einer maximalen Abweichung von ± 10 %, vorzugsweise ± 5 % der Klebenahtbreite versetzt. Eine
besonders hohe und gleichmäßige Packungsdichte des
Schlauchmaterials in der Raupe wird erzielt, wenn die
Klebenaht zwischen zwei benachbarten Windungen der Hauptfalte exakt um ihre Breite verschoben ist.

Besonders knickfeste Raupen erhält man nach der Erfindung dann, wenn die Neigung der Doppellage des Hüllenmaterials in der gerafften Schlauchhülle zur Hüllenlängsachse möglichst gering ist, d.h. wenn der Winkel zwischen Doppellage und Raupenlängsachse kleiner als 35°, vorzugsweise 20 bis 30°, beträgt. Ein solcher niedriger Neigungswinkel wird beispielsweise mit dem rotierenden, hülsenförmigen Raffelement der US-A-4,185,358 erzeugt, in dem man den im zylindrischen Innern des Raffelements schraubenförmig gewundenen Vorsprung entsprechend modifiziert. Man läßt beispielsweise diesen Vorsprung in Form einer Anfasung auf der Raupenseite enden. Der Winkel der Anfasung ist gleich dem gewünschten Winkel zwischen Doppellage und Raupenlängsachse.

Ein wesentliches Merkmal des Verfahrens besteht darin, daß man die Hülle vor und/oder während dem Raffen verdrillt. Das geschieht vorzugsweise dadurch, daß man die Hülle bereits vor dem Raffen verdrillt und in verdrilltem Zustand auf eine Rolle aufwickelt, von der dann die verdrillte Hülle der Raffvorrichtung zugeführt wird. Es ist besonders vorteilhaft, wenn man die Hülle bereits bei ihrer Herstellung sofort nach Bildung ihrer Naht verdrillt und unter Flachlegen verdrillt aufrollt. Im letzteren Fall wird die durch die Verklebung der Randzonen der endlosen Bahn gebildete Klebenaht unmittelbar nach Bildung der schlauchförmigen Hülle verdrillt, die verdrillte Hülle flachgelegt und aufgewickelt.

Eine geeignete Vorrichtung besteht beispielsweise aus einem ersten Zugwalzenpaar, welches den geklebten

HOECHST AKTIENGESELLSCHAFT
KALLE Niederlassung der Hoechst AG

- 8 -

Schlauch von der Klebestation abzieht, und einem zweiten
Zugwalzenpaar, welches um die Längsachse der Hülle
rotiert und dabei die Hülle im Auslauf aus diesem zweiten
Zugwalzenpaar verdrillt. Zwischen den beiden Zugwalzenpaaren wird der Schlauch mit einem Stützgas in aufgeblasenem Zustand gehalten.

In dem von dem zweiten Zugwalzenpaar gebildeten Spalt
wird die Hülle gleichzeitig flachgelegt. Zur Vermeidung
von Faltenbildung bei Hüllen mit relativ großem Durchmesser, z.B. von 120 mm, können beim Einlaufen der Hülle
in diesen Spalt vor dem zweiten Zugwalzenpaar Elemente
angebracht werden, welche die Hülle stetig zunehmend abflachen und allmählich in den flachgelegten Zustand
überführen. Geeignete Elemente sind beispielsweise Leitbleche, Rollenbahnen, Förderbänder oder Leitwalzen, die
konvergierend zueinander verlaufen, wie sie beispielsweise bei der Herstellung von extrudierten Kunststoffschläuchen üblich sind.

Alle Vorrichtungsteile zum Verdrillen, Flachlegen und
Aufwickeln drehen sich mit gleicher Geschwindigkeit um
die Längsachse der Hülle. Diese Teile sind deshalb
zweckmäßigerweise auf einem gemeinsamen, rotierenden
Gestell untergebracht und können auch Teil der Schlauchformanlage sein.

Das Ausmaß der Verdrillung des Schlauches und der Klebenaht wird durch die Drehgeschwindigkeit dieser Vorrichtungsteile bzw. des Gestells und durch die Schlauchgeschwindigkeit bestimmt.

Wird die Hülle beispielsweise mit einer Geschwindigkeit von 5 m/min vorwärtsbewegt bzw. mit dieser Geschwindigkeit aus einer Bahn gebildet und beträgt die Drehzahl der die Hülle verdrillenden Elemente 5 Umdrehungen/min, so erhält die Hülle 10 Windungen je 10 m Hüllenlänge und bei einer Geschwindigkeit der Hülle von 200 m/min und einer Drehzahl von 200 Umdrehungen/min liegt die Zahl der Windungen je 10 m Hüllenlänge ebenfalls bei 10. Bei einem Raffverhältnis von z.B. 100:1 (50:1) ist bei 10 Windungen/10 m Hüllenlänge der Wendelabstand 1 cm (2 cm) auf der Raupe. Eine dichte Raupe wird mit diesem Verfahren erreicht, wenn die Zahl der Windungen je 10 m Hüllenlänge größer als 10 ist, d.h. wenn der Wendelabstand in der Raupe kleiner als 1 cm (Raffverhältnis 100:1) bzw. kleiner als 2 cm (Raffverhältnis 50:1) ist. Diese optimale Zahl der Windungen pro 10 m Hüllenlänge wird durch die gegenseitige Anpassung der Hüllengeschwindigkeit und Drehzahl erzielt, wobei der bevorzugte Bereich für die Hüllengeschwindigkeit bei 5 bis 200 m/min und für die Drehzahl bei 5 bis 200 Umdrehungen/min liegt. Die gegenseitige Anpassung der Hüllengeschwindigkeit und der Drehzahl wird durch den Quotienten aus Drehzahl (Umdrehungen/min) und Hüllengeschwindigkeit (m/min) festgelegt, der vorzugsweise größer als 1 (Umdrehungen/m) ist und üblicherweise 4 (Umdrehungen/m) nicht übersteigt. Mit diesen Werten lassen sich dichte Raupen aus Hüllen mit einer Klebenaht herstellen.

HOECHST AKTIENGESELLSCHAFT
KALLE Niederlassung der Hoechst AG

- 10 -

Durch die Variation des Verhältnisses von Drehzahl und Hüllengeschwindigkeit lassen sich aber auch beliebig andere Steigungen der Naht bzw. eine beliebige andere Anzahl von Windungen der Hülle pro Längeneinheit erreichen.

Der Raffdorn ist ein hohles Rohr, welches den Schlauch stützt und der beim Raffen entstehenden Schlauchraupe einen bestimmten Innendurchmesser gibt. Außerdem wird der Schlauch während des Raffens durch das Rohr hindurch leicht aufgeblasen, um ihm die für den Angriff der Raffkräfte erforderliche pralle Gestalt zu geben.

In einer weiteren Ausführungsform erhält die Wursthülle eine Drehbewegung um den Raffdorn, wodurch die Rafffalten, gegebenenfalls zusätzlich zur vorhergehenden Verdrillung, zu einem schraubenförmigen Muster gedreht werden. Bezüglich Drehzahl und Hüllengeschwindigkeit gelten die obengenannten Werte.

Die zum Raffen dienende Kraft wird von einem um die Längsachse der Schlauchhülle rotierenden Element aufgebracht, welches sich während des Raffvorgangs ständig im Krafteingriff mit der Schlauchhülle befindet und die zur Ausbildung der biegesteifen Raupe ausreichende Preßkraft auf die Schlauchhülle ausübt (US-A-4,185,358). Zweckmäßigerweise wird die zu raffende Schlauchhülle vor oder während dem Raffvorgang mit einem Gleitmittel und/oder Befeuchtungsmittel versehen. Die Vorrichtung zur Durchführung des Raffvorgangs besteht aus einem Rafforgan und

HOECHST AKTIENGESELLSCHAFT
KALLE Niederlassung der Hoechst AG

- 11 -

einem Widerlager, wobei das Rafforgan aus einem die Schlauchhülle umschließenden und in Rotation um diese versetzbaren Ringteil besteht, an dem das zum Raffen dienende und mit der Schlauchhülle im Eingriff stehende Element befestigt ist.

Das Ringteil ist eine im Prinzip bekannte innen schraubenförmig verzahnte rotierende Hülse, welche auf das Schlauchmaterial eine axial verdichtende Kraft ausübt (US-A-4,185,358). Im zylindrischen Innern der Hülse befindet sich ein schraubenförmig gewundener Vorsprung, der von der Innenseite der Hülse als Schraubenwindung absteht. Mit diesem Verfahren bzw. mit dieser Vorrichtung erhält man die typische Faltenstruktur aus spirallinienförmiger Hauptfalte und zickzackförmiger Sekundärfalte. Die Rotationsgeschwindigkeit $U_{RE}$ (Umdrehung/min) des rotierenden hülsenförmigen Raffelements muß für den erfindungsgemäßen Fall einer idealen Verlagerung der streifenförmigen Verdickung, insbesondere Klebenaht, zwischen aufeinanderfolgenden Hauptfalten so gewählt werden, daß ihr Verhältnis zur Rotationsgeschwindigkeit $U_S$ (Umdrehung/min), mit welcher der Schlauch bei seiner Herstellung und/oder beim Raffen verdreht bzw. verdrillt wird, folgende Beziehung erfüllt:

$$\frac{U_{RE}}{U_S} = \frac{\text{Außenumfang der Raupe}}{\text{Breite der Verdickung (Nahtzone)}}$$

Die beiden Rotationsgeschwindigkeiten stehen somit im

HOECHST AKTIENGESELLSCHAFT
KALLE Niederlassung der Hoechst AG

- 12 -

Idealfall in einem Verhältnis wie es sich aus dem Verhältnis des Raupenaußenumfangs und der Breite der Verdickung bzw. der Nahtzone ergibt.

Die Erfindung wird anhand der folgenden Beispiele näher
erläutert.

Beispiel 1
Viskose wird durch einen Spalt in ein saures Koagulationsbad gepreßt. Die nach dem Regenerieren erhaltene
Bahn aus Cellulosehydrat-Gel wird durch ein Weichmacherbad geführt, das aus einer 9 gew.-%igen wäßrigen Glycerinlösung besteht. Nach dem Trocknen zeigt die erhaltene
Bahn aus regenerierter Cellulose ein Flächengewicht von
41 g/m$^2$, einen Wassergehalt von ca. 8 Gew.-% und einen
Glyceringehalt von ca. 15 Gew.-%. Der Wassergehalt wird
gegebenenfalls durch Wiederbefeuchten eingestellt. Das
Bahnmaterial zeigt ferner eine Reißfestigkeit von 48 bis
53 N/mm$^2$ in Querrichtung.

Die Cellulosebahn wird in 60 mm breite Bänder geschnitten. Jeder bandförmige Zuschnitt wird mit einer Vorrichtung, wie in Fig. 8 der EP-A-0 037 543 gezeigt, entlang eines seiner beiden Ränder mit einer 12 gew.-%igen
wäßrigen Lösung (pH 7,5, eingestellt mit konz. Ammoniaklösung) eines wasserlöslichen kationischen Harzes
streifenförmig in Bandlängsrichtung beschichtet und, wie
dort ebenfalls gezeigt, zu einem Schlauch geformt. Das
kationische Harz ist ein Reaktionsprodukt aus Ethylendiamin, Adipinsäure, Diethylentriamin und Epichlorhydrin und ist als 12 und 20 gew.-%ige wäßrige Lösung unter dem Namen ®Resamin HW 601 (Hersteller Cassella) im Handel.

Hierzu wird die Lösung mittels einer rotierenden, ca. 2 mm breiten Antragswalze aus einer Vorratswanne auf das laufende Folienband übertragen und nimmt dort bei einer Naßschichtdicke von 10 bis 12 /um eine Breite von 2 bis 3 mm ein. Das in Randnähe beschichtete Band wird mit Hilfe äußerlich und innerlich angreifender Formhilfen derart zu einem Schlauch mit einem Durchmesser von 18 mm geformt, daß die mit der Lösung beschichtete Kante und die unbeschichtete Kante sich um ca.3,5 mm (= Breite der Nahtzone) überlappen. Die jeweiligen kantennahen Bereiche bilden eine in Längsrichtung verlaufende, überlappte Klebenaht (vgl. Fig. 1 der EP-A-0 037 543), wobei eine Klebstoffschicht entsprechend einem Flächengewicht von 1 bis 2 $g/m^2$ resultiert. Der gebildete Schlauch wird ca. 1 bis 2 sec nach Bildung der Überlappungsnaht flachgelegt, zwischen zwei Zugwalzenpaaren mit Stützgas aufgeblasen, vom zweiten um die Schlauchlängsachse rotierenden Zugwalzenpaar verdrillt und flachgelegt und danach aufgerollt. Die Geschwindigkeit der Schlauchfortbewegung beträgt 40 m/min, die Rotationsgeschwindigkeit $U_S$ (Drehzahl) ist 120 Umdrehungen/min, die Steigung der Verdrillung (Wendelabstand) 33,3 cm.

Die so hergestellten und verdrillt aufgewickelten Schlauchhüllen werden nach einer Lagerzeit von 3 Tagen von der Rolle mit einer Geschwindigkeit von 40 m/min abgewickelt und mit der aus der US-A-4,185,358 bekannten

HOECHST AKTIENGESELLSCHAFT
KALLE Niederlassung der Hoechst AG

- 14 -

Vorrichtung im Raffverhältnis 1:75 gerafft. Der Raffdorn ist feststehend ausgebildet und hat einen Durchmesser von 11,5 mm. Das innenliegende Gewinde des hülsenförmigen Raffelements zeigt auf der Raupenseite eine
Anfasung von 30°, bezogen auf die Rotationsachse. Die
erhaltenen Raupen zeigen einen Außendurchmesser von
18 mm und einen inneren Hohlkanal mit einem Durchmesser
von 11,5 mm. Der Wendelabstand der Nahtzone auf den
Raupen ist 0,45 cm.

Der Wendelabstand (cm) ergibt sich aus der Beziehung

$$\frac{\text{Schlauchgeschwindigkeit beim Aufwickeln (m/min)} \times 100}{\text{Drehzahl (Umdrehungen/min)} \times \text{Raffdichte}}$$

Die Raffdichte ist der Quotient aus Schlauchlänge/Raupenlänge und liegt bei üblichen Werten, d.h. zwischen 20
und 120.

In verschiedenen Versuchen (Proben A bis H, vgl. Tabelle
1) rotiert das hülsenförmige Raffelement mit verschienen Rotationsgeschwindigkeiten $U_{RE}$. Es gilt entsprechend
der obengenannten Beziehung

$$\frac{U_{RE}}{120} = \frac{18\,\pi}{3,5}$$

Daraus ergibt sich für die optimale Rotationsgeschwindigkeit $U_{RE}$ des Raffelements ein Wert von ca. 1938 Umdrehungen/min.

Die Prüfung der Bruchfestigkeit der Raupenproben  geschieht durch Messung des Bruchmoments B. Hierzu wird eine im Abstand von 20 cm unterstützte Raupe (L = Länge der Probe = 20 cm) mit der Kraft p (N) bis zum Brechen bzw. Knicken belastet. Das Bruchmoment B ist dann (L/2)p.

## Tabelle 1

| Raupenprobe | A | B | C | D | E | F | G | H |
|---|---|---|---|---|---|---|---|---|
| Rotations-geschwindigkeit ($U_{RE}$) des Raffelements (Umdrehg/min) | 1820 | 1872 | 1938 | 1990 | 2042 | 2353 | 2500 | 2666 |
| Bruchmoment B (N . cm) | 80 | 90 | 100 | 90 | 70 | 50 | 40 | 30 |

Es zeigt sich, daß die Raupe C die höchste Bruchfestigkeit und ein sehr glattes und gleichmäßiges Äußeres besitzt. Diese Probe weist eine derartige Verlagerung der Nahtzone auf, daß auf dem Außenumfang der Raupe von Hauptfalte zu Hauptfalte exakt eine Verschiebung der Nahtzone um die Breite der Nahtzone (3,5 mm) vorliegt, während die anderen Proben diesen idealen Zustand nicht besitzen. Bei A und B ist die Überlappung so verlagert, daß von Hauptfalte zu Hauptfalte eine größere Verschiebung der Nahtzone in Umfangsrichtung vorliegt. Bei

HOECHST AKTIENGESELLSCHAFT
KALLE Niederlassung der Hoechst AG

- 16 -

den Proben D bis H überdecken sich die Nahtzonen von Hauptfalte zu Hauptfalte in zunehmendem Maße.

Wegen ihrer vorzüglichen Gleichmäßigkeit und Bruchfestigkeit eignen sich Raupen gemäß C am besten für den Einsatz an Hochleistungsfüllmaschinen. Die Raupenproben A, B und D zeigen zwar keine optimalen Eigenschaften. Für einfache Füllmaschinen ist ihre Bruchfestigkeit noch ausreichend.

Der Hohlkanal der Raupenproben A bis D ist gerade und besitzt eine glatte Innenwandung. Die Raupen lassen sich ohne Probleme auf das Füllrohr einer Stopfvorrichtung aufschieben und werden beim Einpressen der Wurstmasse gleichmäßig gefüllt.

Beispiel 2

Unter Verwendung des verdrillten Schlauchwickels aus Beispiel 1 rafft man mit den gleichen Einstellungen an der Raffmaschine wie bei der Probe C des Beispiels 1, verwendet aber hülsenförmige Raffelemente mit einem schraubenförmigen Vorsprung im Innern, dessen Anfasung an dem der Raupe zugewandten Ende des Raffelements im Bereich von 40° bis 20° variiert ist.

Man erhält Raupen (Tabelle 2), die zwar den idealen Fall der aufeinanderfolgenden Verlagerung der Nahtzone aufweisen, sich jedoch in der Bruchfestigkeit unterscheiden:

HOECHST AKTIENGESELLSCHAFT
KALLE Niederlassung der Hoechst AG

- 17 -

Tabelle 2

| Raupenproben | A | B | C | D | E | F |
|---|---|---|---|---|---|---|
| Winkel der Anfasung | 40° | 35° | 30° | 25° | 22° | 20° |
| B (N . cm) | 20 | 70 | 100 | 110 | 120 | 120 |

Die optimale Bruchfestigkeit liegt bei Neigungswinkeln von kleiner als 35°, insbesondere zwischen 30 und 20°.

Beispiel 3

Man stellt gemäß Beispiel 1 verklebte Schläuche vom Kaliber 43 mm her, wobei unterschiedlich breit geschnittene Bahnen (Tabelle 3) mit einem Flächengewicht von 50 g/m$^2$, einem Wassergehalt von 8 % und einem Glyceringehalt von 16 % verwendet werden. Man erhält Schläuche mit verschiedener Breite der Nahtzone; die Kleberantragsbreite beträgt ca. 90-100 % der jeweiligen Überlappungsbreite (= Nahtzone).

Die Schläuche werden mit einer Geschwindigkeit von 160 m/min in eine Raffmaschine (US-A-4,185,358) gefördert, deren hülsenförmiges Raffelement mit $U_{RE}$ = 5 333 Umdrehungen/min und deren Raffdorn (Durchmesser 27 mm) mit einer Drehzahl $U_S$ von 278 Umdrehungen/ min rotieren.

HOECHST AKTIENGESELLSCHAFT
KALLE Niederlassung der Hoechst AG

- 18 -

Tabelle 3

| Raupenproben | A | B | C | D | E | F |
|---|---|---|---|---|---|---|
| Breite der Bahn (mm) | 135,5 | 136 | 138 | 142 | 147 | 160 |
| Breite der Nahtzone (mm) | 0,5 | 1 | 3 | 7 | 12 | 25 |

Man erhält Raupen mit einem Außendurchmesser von 43 mm, einer Innenbohrung vom Kaliber 27 mm, einer Raffdichte von 100 und einer Steigung der gewendelten Nahtzone auf der Raupe (= Wendelabstand) von 5,75 mm.

Die Raupe D besitzt als einzige die ideale Verlagerung der Überlappung und ist in dieser Versuchsreihe die beste Raupe hinsichtlich gleichmäßigem Aussehen und Festigkeit.

Beim Füllen mit Fleischwurstmasse erweisen sich ihre günstigen Gebrauchseigenschaften.

Nach Räuchern und Brühen erhält man wohlaussehende Würste vom Fleischwursttyp mit einer Ausnahme: An Würsten aus der Raupe A haben sich die Nähte infolge der thermischen und mechanischen Belastungen bei der Aufarbeitung geöffnet. Die Nahtbreite ist mit 0,5 mm zu gering, um eine ausreichende Bruchfestigkeit zu gewährleisten.

HOECHST AKTIENGESELLSCHAFT
KALLE  Niederlassung der Hoechst AG

- 19 -

Die Erfindung wird durch die Fig. 1 bis 7 näher
erläutert. Es zeigt:

Fig. 1     ein Beispiel für die geraffte Wursthülle,

Fig. 1a    einen vergrößerten Ausschnitt der gerafften
           Wursthülle nach Fig. 1 etwa in deren Bereich Ia

Fig. 1b    einen Schnitt nach Linie Ib-Ib der Fig. 1a

Fig. 2     ein Verfahren zur Herstellung eines Schlauches
           aus einer Bahn und Aufrollen des verdrillten
           Schlauches,

Fig. 3     in perspektivischer Ansicht die Wickelrolle der
           Fig. 4,

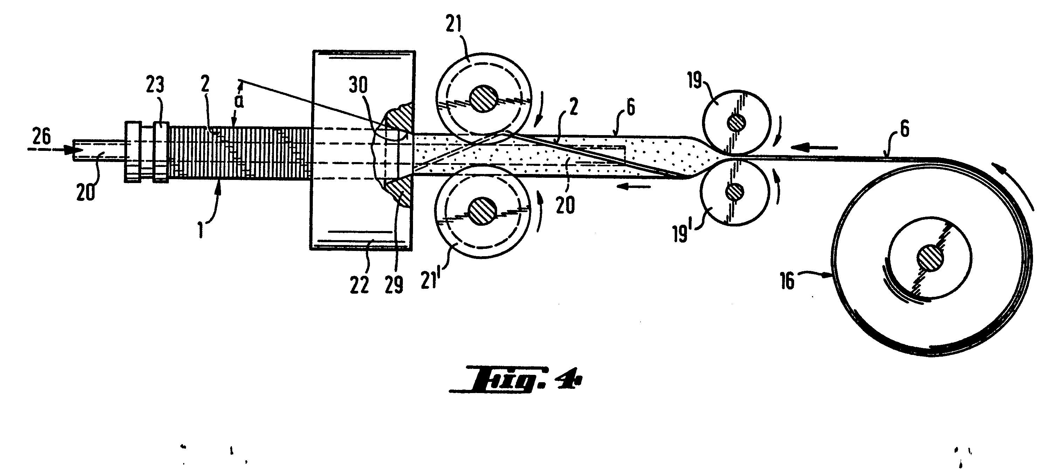

Fig. 4     die Herstellung eines gerafften Schlauches
           unter Abrollen eines verdrillt aufgewickelten
           Schlauches,

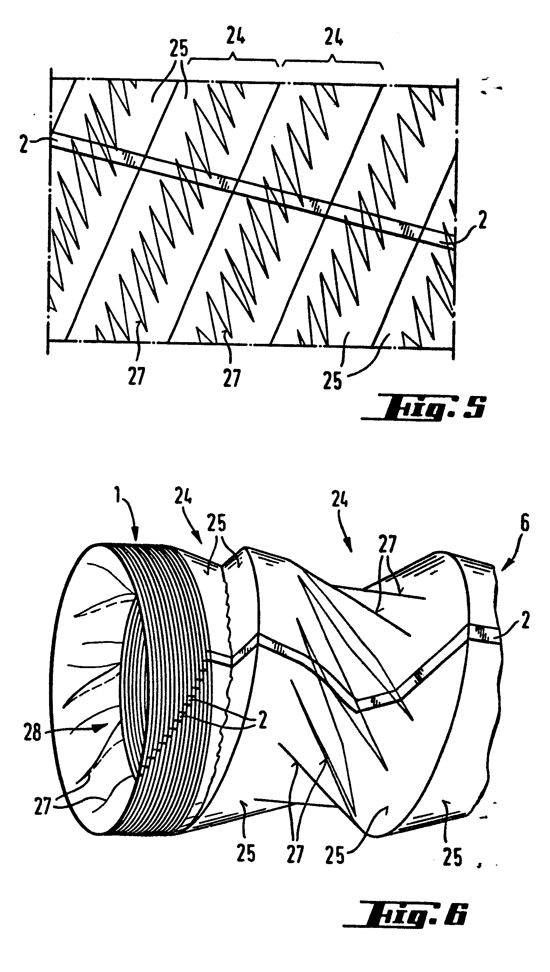

Fig. 5     das Faltenmuster einer entrafften und aufgeschnittenen Raupe,

Fig. 6     eine perspektivische Ansicht der Raupe, zum
           Teil im aufgezogenen Zustand,

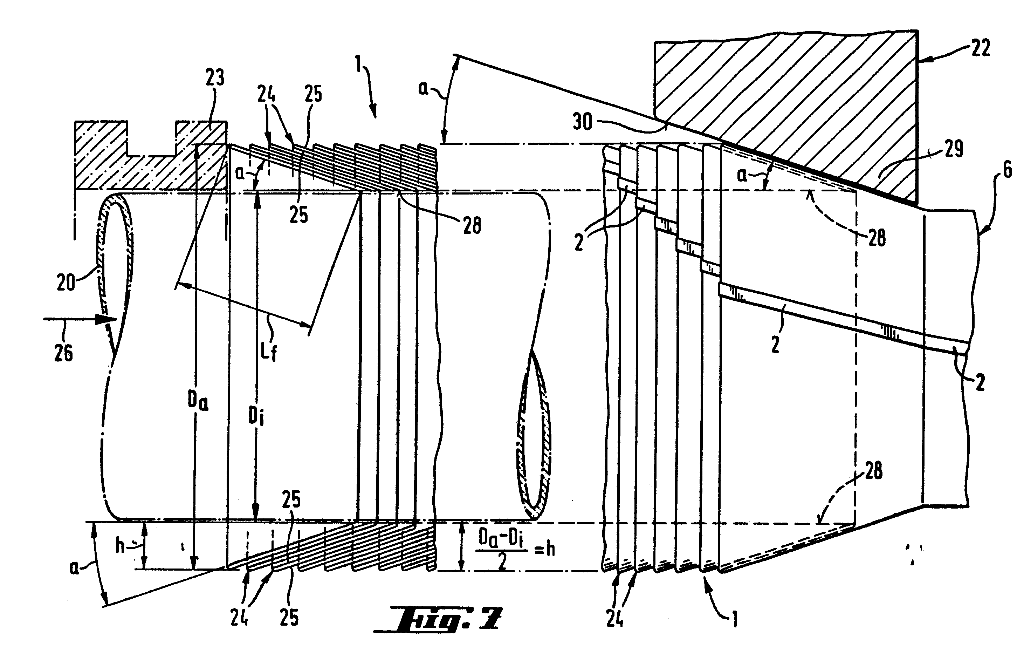

Fig. 7     die Anfasung mit der erfindungsgemäßen Neigung,
           gegen welche die Hülle zusammengeschoben werden
           kann.

HOECHST AKTIENGESELLSCHAFT
KALLE Niederlassung der Hoechst AG

- 20 -

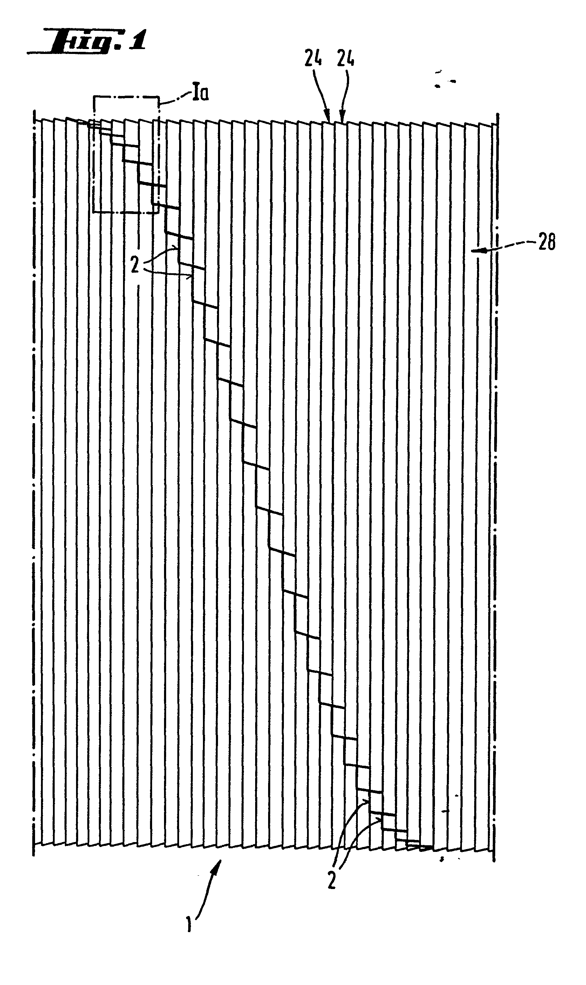

In Fig. 1 zeigt die geraffte Schlauchhülle 1 eine gewendelte Nahtzone 2 mit gleichmäßiger Steigung. Der gestrichelt gezeichnete Teil der Nahtzone 2 befindet sich in der Doppellage 25 zwischen zwei Windungen der Hauptfalte 24. Mit 28 ist der Hohlkanal der Raupe bezeichnet. Die in der Fig. 1a und 1b ausschnittsweise und vergrößert dargestellte Raupe 1 wird in etwas aufgezogenem Zustand gezeigt.

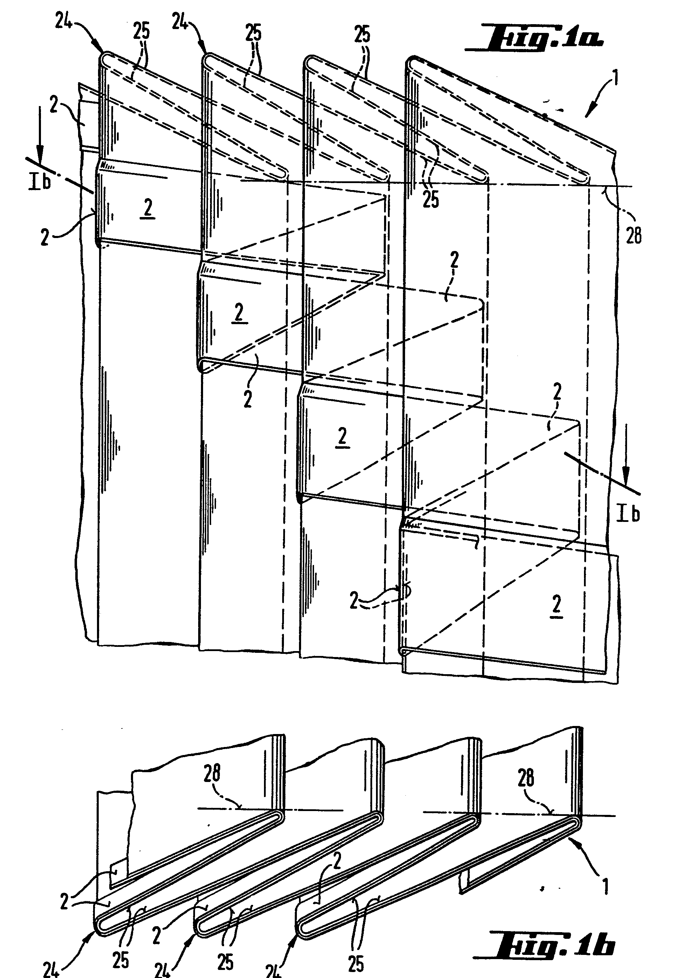

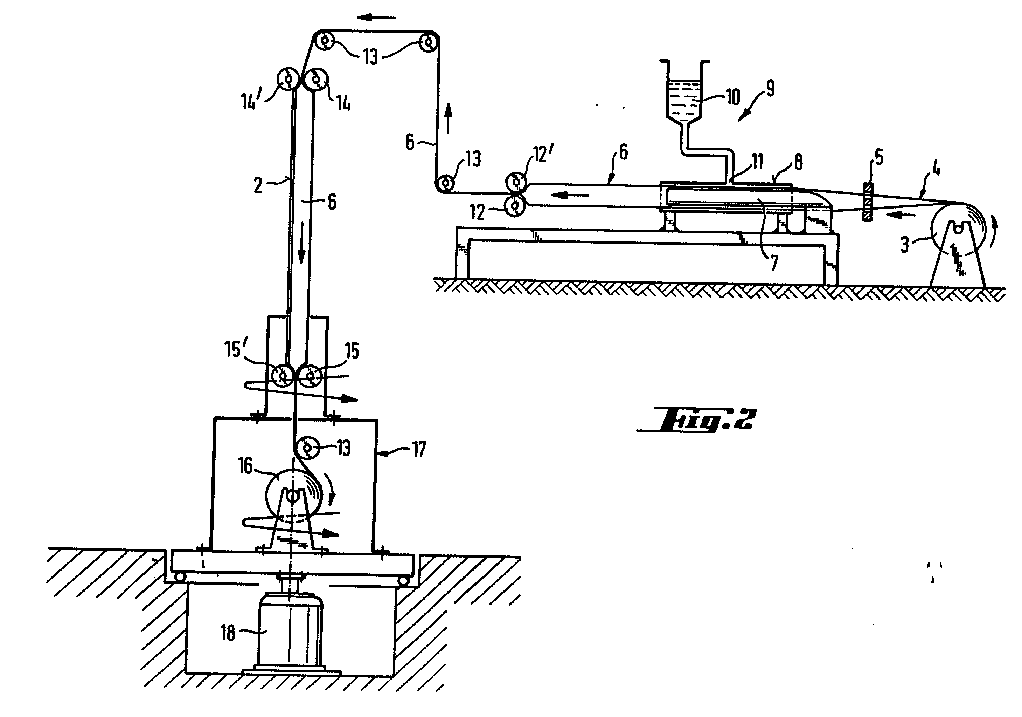

In Fig. 2 wird die Bahn 4 aus Cellulose von einer Rolle 3 abgewickelt, durch eine Formschablone 5 geführt und mit dem Stützrohr 7 und der Hülse 8 zu einem Schlauch 6 geformt, wobei sich die beiden Ränder in der Formschablone 5 nähern. Das Stützrohr 7 und die Hülse 8 dienen zur Unterstützung der Schlauchbildung, wobei der Schlauch von innen und außen abgestützt wird.

Die Auftragseinrichtung 9 erzeugt mit einer Düse 11 einen streifenförmigen Auftrag der Klebstofflösung 10 zwischen den sich überlappenden Randzonen der Bahn 4. Nach Durchlaufen der Zugwalzen 12, 12' und Umlenkwalzen 13 wird der Schlauch zwischen zwei Quetschwalzenpaaren 14, 14' und 15, 15' aufgeblasen und mit der Rolle 16 aufgewickelt.

Das Quetschwalzenpaar 15, 15' und die Rolle 16 befinden sich auf einem gemeinsamen Gestell 17, welches mit dem Antriebsmotor 18 gedreht wird, wodurch die Schlauchnaht 2 in verdrillter Form auf der Rolle 16 aufgewickelt wird.

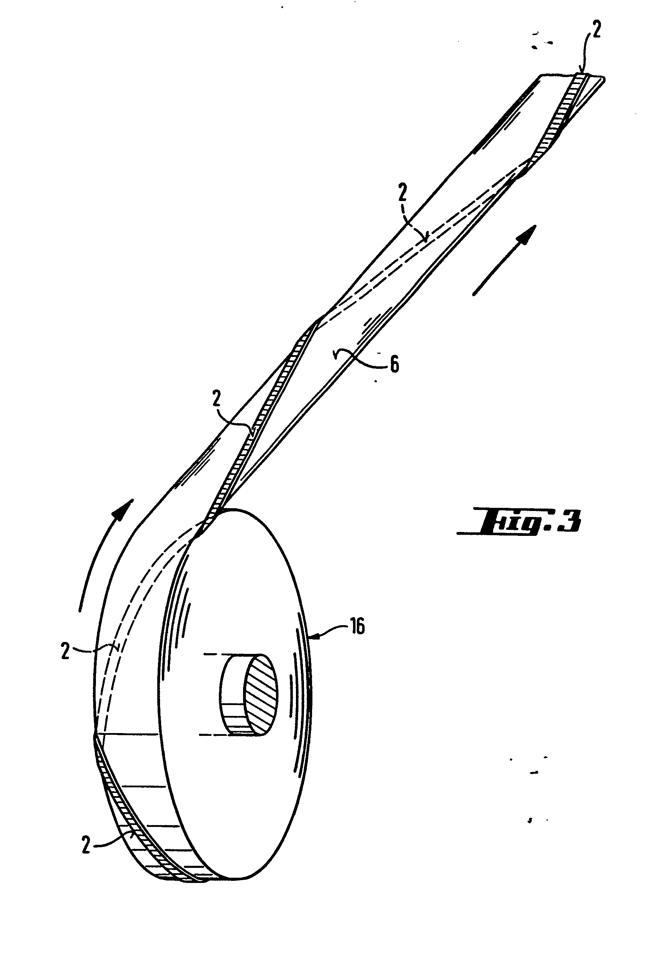

In Fig. 3 und 4 haben die Bezugsziffern die gleiche Bedeutung wie in den vorhergehenden Figuren. In der Fig. 4 wird der verdrillt aufgewickelte Schlauch 6 von der Rolle 16 abgewickelt und nach Durchlaufen der Quetschwalzen 19, 19' in aufgeblasenem Zustand gehalten, wobei durch den Raffdorn 20 in bekannter Weise Luft 26 eingeblasen wird. Der aufgeblähte Schlauch 6 bewegt sich durch zwei weitere angetriebene Rollen 21, 21' in Richtung auf das hülsenförmige Raffelement 22, wo der eigentliche Raffvorgang stattfindet. Mit 23 ist ein Widerlager bezeichnet, gegen das der Schlauch zur Raupe 1 zusammengepreßt wird.

In Fig. 5 ist das Faltenmuster und der Verlauf der Nahtzone 2 dargestellt, wie es sich ergibt, wenn man die Raupe entrafft, die erhaltene Schlauchhülle in längsaxialer Richtung aufschneidet und flachlegt. Zwischen den Faltenlinien der spiralförmigen Hauptfalte 24 befinden sich die zickzackförmigen Linien der Sekundärfalte 27.

In Fig. 6 ist ein Stück der Raupe 1 dargestellt, an derem einen Ende die Schlauchhülle 6 ein Stück weit abgezogen dargestellt ist.

Die Fig. 7 zeigt das dem Widerlager 23 (Fig. 4) und der gerafften Schlauchhülle 1 zugewandte Ende 29 des spiralförmig gewundenen Vorsprungs des hülsenförmigen Raffelements 22. Der Vorsprung ist in Fig. 5 der US-A-4,185,358 mit der Bezugsziffer 21 versehen. Die vorliegende Fig. 7 dient zur Erläuterung des im Anspruch 3 genannten Winkels a zwischen der Fläche der Raffalte, die sich von der Windung der Hauptfalte 24 bis zur Innenfläche der Raupe im Hohlkanal 28 erstreckt und der Raupenlängsachse bzw. dem Winkel a der Anfasung 30. Der Winkel a läßt sich ermitteln aus der Faltenhöhe h, die sich aus der halben Differenz des äußeren und inneren Durchmessers $D_a$ bzw. $D_i$ der Raupe ergibt, und der Länge $L_f$ der Raffalte. Es gilt dabei die Beziehung

$$\sin a = \frac{h}{L_f} = \frac{D_a - D_i}{2\,L_f}$$

Die genannte Fläche der Raffalte bildet eine Kegelstumpfmantelfläche zur längsaxialen Drehachse und zeigt die Neigung der Doppellage 25, die sich zwischen zwei benachbarten Windungen der Hauptfalte 24 befindet.

Die geraffte Wursthülle der Erfindung ist - trotz der Verdickung, z.B. in Form einer Klebenaht - gleichmäßig ausgebildet, besitzt einen geraden inneren Hohlkanal mit gleichmäßigem kreisförmigem großem Querschnitt, zeigt hohe Steifigkeit und Bruchfestigkeit. Die Falten werden fest und eng zusammengehalten. Die Wursthülle gestattet sicheres Hantieren beim Transport und läßt sich problemlos an schnell arbeitenden Füllmaschinen einsetzen. Der große Querschnitt des Hohlkanals erlaubt die Verwendung von Füllrohren mit großen Durchmessern, wodurch die Wursthülle schneller mit Wurstmasse gestopft werden kann.

------------------

HOECHST AKTIENGESELLSCHAFT
KALLE Niederlassung der Hoechst AG

82/K 040                    - 23 -          WLJ-Dr.Gt-cc
                                            21. Juli 1983

PATENTANSPRÜCHE

1. Geraffte, schlauchförmige Wursthülle (1) in Form eines Hohlzylinders mit einem inneren, im wesentlichen im Querschnitt kreisförmigen Hohlkanal (28), einer die Außenseite des Hohlzylinders bildenden kontinuierlichen spiralförmigen Hauptfaltenstruktur (24) sowie Sekundärfaltenlinien (27), die im entrafften Zustand der Wursthülle zwischen den Windungen der Hauptfalte (24) die Form einer durchgehenden Zickzacklinie aufweisen, wobei die Hülle eine längsaxial sich erstreckende streifenförmige Verdickung (2), insbesondere in Form einer Klebenaht, mit einer Mindestbreite von 1 mm und einer Maximalbreite von 10 % des Hüllenumfangs im ungerafften Zustand aufweist, welche spiralförmig um die Längsachse der Hülle angeordnet ist, dadurch gekennzeichnet, daß die Verdickung (2) quer zu den Windungen der Hauptfalte (24) verläuft, wobei sie zwischen zwei benachbarten Windungen der Hauptfalte (24) um ihre Breite mit einer Abweichung von höchstens $\pm$ 10 % ihrer Breite in Umfangsrichtung der gerafften Hülle versetzt ist.

2. Geraffte Hülle nach Anspruch 1, dadurch gekennzeichnet, daß die Verdickung (2) zwischen zwei benachbarten Windungen der Hauptfalte (24) um die Breite der Verdickung (2) mit einer Abweichung von höchstens $\pm$ 5 % der Breite der Verdickung (2) in Umfangsrichtung versetzt ist.

3. Geraffte Hülle nach einem der Ansprüche 1 oder 2,

HOECHST AKTIENGESELLSCHAFT
KALLE Niederlassung der Hoechst AG

82/K 040                    - 24 -

dadurch gekennzeichnet, daß die zwischen zwei benachbarten Windungen der Hauptfalte (24) vorhandene Doppellage (25) des Hüllenmaterials in einem Winkel von kleiner als 35°, insbesondere 30° bis 20°, zur Längsachse der gerafften Hülle angeordnet ist.

4. Geraffte Hülle nach einem der Ansprüche 1 bis 3, dadurch gekennzeichnet, daß die Anzahl der Windungen der streifenförmigen Verdickung (2) pro 10 m entraffter Hüllenlänge 10 bis zu 40, insbesondere 15 bis 30, beträgt.

5. Geraffte Hülle nach einem der Ansprüche 1 bis 4, dadurch gekennzeichnet, daß der Bereich der Verdickung (2), vorzugsweise der Klebenaht, insbesondere die Klebstoffschicht, einen Farbstoff enthält.

6. Geraffte Hülle nach einem der Ansprüche 1 bis 5, dadurch gekennzeichnet, daß die Verdickung (2) in Form einer Klebenaht aus überlappten Rändern besteht, die im Überlappungsbereich mit einer Klebstoffschicht und/oder mit Folienstreifen miteinander verklebt sind, wobei der oder die Folienstreifen vorzugsweise aus dem gleichen Material wie die Hülle besteht bzw. bestehen.

7. Geraffte Hülle nach einem der Ansprüche 1 bis 5, dadurch gekennzeichnet, daß die Klebenaht aus aneinander stoßenden Rändern besteht, welche mit beide Ränder überdeckenden Folienstreifen auf der Außenseite und/oder Innenseite der Hülle verbunden sind.

8. Geraffte Hülle nach einem der Ansprüche 1 bis 7, dadurch gekennzeichnet, daß die Steigung der spiralförmigen Windungen der Klebenaht auf der gerafften Hülle gleichförmig ist.

9. Verfahren zur Herstellung der gerafften Wursthülle (1) mit einem Außenumfang (AU) nach einem der Ansprüche 1 bis 8, wobei man eine aufgewickelte schlauchförmige Hülle (6) mit einer Verdickung (2), insbesondere Klebenaht, mit einer Breite (b), unter Abwickeln einem Raffdorn (20) zuführt, sie auf den Raffdorn (20) unter einem inneren Gasdruck aufschiebt und sie gegen ein Widerlager (23) unter Bildung der spiralförmigen Hauptfaltenstruktur (24) und Sekundärfaltenlinien (27) in Form der Zickzacklinie rafft, dadurch gekennzeichnet, daß man die Hülle (6) mit einer Geschwindigkeit ($U_S$) verdrillt, in verdrilltem Zustand aufwickelt und vom Wickel in verdrilltem Zustand dem Raffdorn (20) zuführt, in verdrilltem Zustand auf den Raffdorn (20) aufschiebt und in verdrilltem Zustand rafft, wobei die Rotationsgeschwindigkeit ($U_{RE}$) des Raffelementes gleich ist $U_S \times AU/(b \pm b/10)$.

10. Verfahren nach Anspruch 9, dadurch gekennzeichnet, daß man die Hülle (6) kontinuierlich bei ihrer Herstellung in verdrilltem Zustand aufwickelt.

11. Verfahren nach Anspruch 9 oder 10, dadurch gekennzeichnet, daß man die Hülle (6) mit Klebenaht (2) mit einer um die Hüllenlängsachse rotierenden Einheit (15, 16, 17) verdrillt und flachlegt, danach aufwickelt und die aufgewickelte verdrillte Hülle (6) im verdrillten Zustand abwickelt und dem Raffdorn (20) zuführt.

12. Verfahren nach Anspruch 11, dadurch gekennzeichnet, daß man die Hülle (6) in aufgeblasenem Zustand einem um die Hüllenlängsachse rotierenden Zugwalzenpaar (15, 15') zuführt, welches die Hülle (6) verdrillt und flachlegt, und die verdrillte flachgelegte Hülle (6) auf einer Rolle (16) aufwickelt, welche mit der gleichen Geschwindigkeit um die Hüllenlängsachse oder um eine Achse parallel zur Hüllenlängsachse rotiert wie das Zugwalzenpaar (15, 15').

13. Verfahren nach einem der Ansprüche 9 bis 12, dadurch gekennzeichnet, daß die Hülle (6) während des Raffens eine weitere Verdrillung erhält, wobei die Hülle (6) während des Raffens gedreht wird, indem der Raffdorn (20) während des Raffens um seine Achse gedreht wird oder die Hülle durch von außen angreifende Rollen (21,21') während des Raffens um ihre Achse gedreht wird.

14. Verfahren nach einem der Ansprüche 9 bis 13, dadurch gekennzeichnet, daß man die Hülle (6) mit einer Drehzahl (Umdrehungen/min) verdrillt und mit einer Geschwindigkeit (m/min) aufwickelt, daß der Quotient (Umdrehungen/m) aus Drehzahl und Geschwindigkeit größer als 1, vorzugsweise maximal 4 ist.

15. Verfahren nach Anspruch 14, dadurch gekennzeich-

HOECHST AKTIENGESELLSCHAFT
KALLE Niederlassung der Hoechst AG

82/K 040                    - 27 -

net, daß man die Hülle (6) mit einer Drehzahl von 5 bis 200 Umdrehungen/min verdrillt und mit einer Geschwindigkeit von 5 bis 200 m/min aufwickelt.

16. Verfahren zur Herstellung der gerafften Wursthülle mit einem Außenumfang (AU) nach einem der Ansprüche 1 bis 8, wobei man eine schlauchförmige Hülle mit einer Verdickung (2), insbesondere Klebenaht mit einer Breite (b) einem Raffdorn zuführt, sie auf den Raffdorn unter einem inneren Gasdruck aufschiebt und sie gegen eine Gegenkraft unter Bildung der spiralförmigen Hauptfaltenstruktur und Sekundärfaltenlinien in Form der Zickzacklinie mit einem rotierenden Raffelement rafft, dadurch gekennzeichnet, daß man die Hülle während des Raffens mit einer Geschwindigkeit ($U_S$) dreht, indem der Raffdorn (20) während des Raffens um seine Achse gedreht wird oder die Hülle durch von außen angreifende Rollen (21,21') während des Raffens um ihre Achse gedreht wird, und die Rotationsgeschwindigkeit ($U_{RE}$) des hülsenförmigen Raffelements (22) gleich ist $U_S \times AU/(b \pm b/10)$.

------------

**Fig. 1**

**Fig. 1a**

**Fig. 1b**

Fig.2

Fig. 3

Fig. 4.

*Fig. 5*

*Fig. 6*

**Fig. 7**

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,Y | EP-A-0 054 162  (HOECHST) <br> * Seite 6 - Seite 8, Zeile 16; Seite 23, Zeilen 1-21; Ansprüche 1-4 * | 1-8,16 | A 22 C  13/02 |
| | --- | | |
| D,Y | US-A-4 185 358  (HOECHST) <br> * Spalte 6, Zeile 20 - Spalte 10, Zeile 8; Figuren 1-3,5,6a-d,8-11 * | 1-3,16 | |
| A | | 9 | |
| | --- | | |
| Y | DE-B-1 288 944  (KALLE) <br> * Insgesamt * | 16 | |
| | --- | | |
| D,Y | US-A-3 619 854  (ILGEN) <br> * Spalte 3, Zeilen 14-22 * | 16 | RECHERCHIERTE SACHGEBIETE (Int. Cl. ³) |
| | --- | | A 22 C |
| D,Y | US-A-3 766 603  (UNION CARBIDE) <br> * Ansprüche 8-10,12 * | 16 | |
| | --- | | |
| D,A | US-A-3 907 003  (KALLE) <br> * Figuren * | 1,9,16 | |
| | --- | | |
| A | FR-A-2 437 295  (UNION CARBIDE) <br> * Figuren 1-4 * | 1,9,16 | |
| | --- | | |
| D,A | EP-A-0 037 543  (HOECHST) | | |
| | ---          -/- | | |

Der vorliegende Recherchenbericht wurde für alle Patentansprüche erstellt

| Recherchenort | Abschlußdatum der Recherche | Prüfer |
|---|---|---|
| DEN HAAG | 08-11-1983 | DE LAMEILLIEURE D. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|-----------|---------------------------------------------------|-----|-----|
| P,A | EP-A-0 073 321 (UNION CARBIDE) | | |

-----

RECHERCHIERTE SACHGEBIETE (Int. Cl. ³)

Der vorliegende Recherchenbericht wurde für alle Patentansprüche erstellt

| Recherchenort | Abschlußdatum der Recherche | Prüfer |
|---------------|----------------------------|--------|
| DEN HAAG | 08-11-1983 | DE LAMEILLIEURE D. |